# EUROPEAN PATENT SPECIFICATION

(11) **EP 3 103 990 B1**
(45) Date of publication and mention of the grant of the patent: **25.07.2018**
(21) Application number: 16173159.1
(22) Date of filing: 06.06.2016
(51) Int. Cl.: F02D 35/02, F02D 41/14, F02D 41/40, F02D 41/00, F02D 41/24

(54) **COMBUSTION NOISE SUPPRESSION CONTROL APPARATUS FOR INTERNAL COMBUSTION ENGINE**
STEUERUNGSVORRICHTUNG ZUR UNTERDRÜCKUNG DES VERBRENNUNGSGERÄUSCHES FÜR EINE BRENNKRAFTMASCHINE
APPAREIL DE COMMANDE DE SUPPRESSION DU BRUIT DE COMBUSTION POUR MOTEUR À COMBUSTION INTERNE

(30) Priority: 09.06.2015 JP 2015116560
(43) Date of publication of application: 14.12.2016
(73) Proprietor: Toyota Jidosha Kabushiki Kaisha, Toyota-shi, Aichi-ken, 471-8571 (JP)
(72) Inventor: KOBAYASHI, Junya, Aichi-ken, 471-8571 (JP)
(74) Representative: D Young & Co LLP

(56) References cited:
- EP-A2- 1 128 050
- WO-A1-2011/090426
- DE-A1-102012 111 714
- DE-A1-102013 109 889
- JP-A- 2001 123 872
- JP-A- 2005 264 814
- US-A1- 2012 048 234

## Description

### BACKGROUND OF THE DISCLOSURE

### 1. Field of the Disclosure

The disclosure relates to a combustion noise suppression control apparatus for an internal combustion engine that corrects a pilot injection amount based on a detection value of an in-cylinder pressure sensor that detects an in-cylinder pressure of the internal combustion engine.

### 2. Description of Related Art

For example in Japanese Patent Application Publication No. 2001-234800 (JP 2001-234800 A), there is proposed an apparatus that detects a combustion noise in each of cylinders through the use of an in-cylinder pressure sensor, that calculates a sound pressure level of a specific frequency component as a combustion noise representative value from the detected value, and that corrects an injection amount and an injection timing of pilot injection based on the combustion noise representative value. In this apparatus, a specific frequency band is defined as a frequency band that is highly effective in reducing the sound pressure level resulting from pilot injection. This frequency band is set in accordance with a time interval between pilot injection and main injection. This takes into account the fact that the frequency band that is highly effective in reducing the sound pressure level resulting from pilot injection is determined by the time interval between pilot injection and main injection. Incidentally, the frequency band that is highly effective in reducing the sound pressure level is an arbitrary frequency band between one frequency f that is determined in accordance with the aforementioned time interval and an "n+(1/2)"-fold multiple of the frequency f. However, the aforementioned document implies especially the use of the specific frequency band closest to a frequency (3 kHz) that is most disagreeable to the human ears, in the arbitrary frequency band (paragraph [0041]).

By the way, a combustion noise that is generated through the combustion of a mixture of fuel and air in an internal combustion engine may be perceived by a user as an abnormal combustion noise disagreeable to the ears, as the sound pressure level of the combustion noise increases due to the superposition on a resonant frequency of pieces of hardware such as a cylinder block and the like. This abnormal combustion noise is generated through the resonance with the pieces of hardware, and hence is determined independently of the specific frequency that is set in accordance with the time interval between pilot injection and main injection as in the aforementioned apparatus.

Moreover, the resonant frequency can disperse as a result of, for example, the fact that the dispersion of the pre-ignition temperature in a combustion chamber increases due to the tolerances and aging of the pieces of hardware and also an increase in the amount of exhaust gas recirculation (EGR). Therefore, it is difficult to use a predetermined frequency as the resonant frequency, and to adapt the pilot injection amount, the injection timing and the like in advance such that the sound pressure level at the frequency does not become excessively high. Thus, the inventor has attempted to correct the pilot injection amount based on the detection value of the in-cylinder pressure sensor, in order to suppress the abnormal combustion noise resulting from the resonant frequency. Then, the inventor has found out that inconveniences such as a deviation of the combustion of main injection from its target and the like can take place as a result of a change in the pilot injection amount originally adapted to an optimal amount, in the case where the pilot injection amount is corrected.
DE 10 2012 111714 A discloses a method for controlling engine noise including combustion noise of an internal combustion engine.
JP 2005 264814 A discloses a fuel injection control device of multi-cylinder diesel engine. DE 10 2013 109889 A1 discloses a fuel injection amount compensating method.
WO 2011/090426 A1 discloses a device and method for analysing a performance of an engine.
US 2012/048234 A1 discloses a system and method for knock detection based on ethanol concentration in fuel.
EP 1 128 050 A2 discloses a fuel injection control apparatus and the usage of multiple individually set maximal references for multiple different combustion noise frequencies.
JP 2001 123872 A discloses a multicylinder engine and the usage of individually set references for multiple different combustion noise frequencies.

### SUMMARY OF THE DISCLOSURE

Aspects of the invention are defined in the appended claims. The disclosure has been made in view of such circumstances, and provides a combustion noise suppression control apparatus for an internal combustion engine that can make suppression of the perception of an abnormal combustion noise by a user and suppression of the correction of a pilot injection amount compatible with each other as much as possible.

Thus, according to one teaching of the disclosure, a combustion noise suppression control apparatus for an internal combustion engine that corrects a pilot injection amount based on a detection value of an in-cylinder pressure sensor that detects an in-cylinder pressure of the internal combustion engine is provided as an teaching as an example of the disclosure. The combustion noise suppression control apparatus is equipped with a sound pressure level calculation process unit, a storage unit, and a pilot correction process unit. The sound pressure level calculation process unit is configured to calculate a frequency distribution of a sound pressure level resulting from combustion of fuel of pilot injection, based on the detection value of the in-cylinder pressure sensor. The storage unit is configured to store a threshold of the sound pressure level independently set for each of a plurality of frequencies. The pilot correction process unit is configured to correct the pilot injection amount when the sound pressure level calculated by the sound pressure level calculation process unit exceeds the threshold at a frequency at which the threshold is set.

The inventor has found out that the sounds perceived by the user can be different from one another depending on the frequency even when the sound pressure level resulting from the combustion of fuel of pilot injection in the combustion chamber remains the same. That is, the amount of damping of the sound pressure level by the cylinder block and the like can be different if the frequency becomes different. Besides, the sound that is likely to disturb the user also depends on the frequency. Therefore, the sound pressure level that is permitted in restraining an abnormal combustion noise from being perceived by the user depends on the frequency.

It should be noted herein that the threshold is independently set for each of the plurality of the frequencies in the configuration of the combustion noise suppression control apparatus as described above. Then, when the sound pressure level resulting from the combustion of fuel of pilot injection exceeds the threshold, the pilot injection amount is corrected by the pilot correction process unit. Therefore, the threshold can be made closer to the maximum value that is permitted in effectively suppressing the abnormal combustion noise that is perceived by the user, in comparison with the case where the threshold is uniformly set for the plurality of the frequencies. Therefore, it is possible to restrain the pilot injection amount from being corrected although the actual sound pressure level is a permitted sound pressure level. Thus, it is possible to make suppression of the perception of an abnormal combustion noise by the user and suppression of the correction of the pilot injection amount compatible with each other as much as possible.

Incidentally, in performing the control of lowering the sound pressure level at a specific frequency, two physical quantities, namely, the injection amount and injection timing of pilot injection can be operation amounts. However, in the case where the injection timing is used as an operation amount, although the sound pressure level can be lowered, the distribution of the sound pressure level also changes remarkably, so the tone changes remarkably. On the contrary, in the configuration of the combustion noise suppression control apparatus as described above, the sound pressure level at the frequency at which the threshold is exceeded can be lowered while suppressing changes in tone, by using the injection amount as an operation amount.

Besides, the aforementioned combustion noise suppression control apparatus for the internal combustion engine may be further equipped with an excess amount calculation process unit that calculates an excess amount as an amount of excess over the threshold when the sound pressure level calculated by the sound pressure level calculation process unit exceeds the threshold at a frequency at which the threshold is set. Also, the pilot correction process unit may be configured to correct the pilot injection amount such that the pilot injection amount decreases as the excess amount increases.

The sound pressure level resulting from the combustion of fuel of pilot injection tends to increase as the pilot injection amount increases. It should be noted herein that when the sound pressure level resulting from the combustion of fuel of pilot injection exceeds the threshold, the excess amount calculation process unit calculates the excess amount, and the pilot correction process unit corrects the pilot injection amount such that the pilot injection amount decreases as the excess amount increases, in the configuration of the combustion noise suppression control apparatus as described above. Therefore, the sound pressure level can be controlled to or below the threshold in a shorter time than in the case where the pilot injection amount is reduced each time by a prescribed amount and feedback-corrected until the sound pressure level becomes equal to or lower than the threshold.

Besides, in the aforementioned combustion noise suppression control apparatus for the internal combustion engine, the pilot correction process unit may be configured to set a value that is obtained by multiplying a ratio, which is obtained by dividing the excess amount by a sound pressure level at a frequency at which the threshold is exceeded, by the pilot injection amount, as a decreasing correction amount of the pilot injection amount.

The aforementioned ratio is a value obtained by dividing the excess amount by the actual sound pressure level. Therefore, if it is assumed that the sound pressure level increases as the pilot injection amount increases, the aforementioned ratio can be regarded as indicating the ratio of the injection amount contributing to the excess amount to the pilot injection amount. Then, from this point of view, the sound pressure level can be controlled to or below the threshold in a shorter time than in the case where the pilot injection amount is reduced each time by the prescribed amount and is feedback-corrected until the sound pressure level becomes equal to or lower than the threshold, by calculating the decreasing correction amount by multiplying the aforementioned ratio by the pilot injection amount.

Besides, in the aforementioned combustion noise suppression control apparatus for the internal combustion engine, the threshold independently set for each of the plurality of the frequencies may be set such that the threshold for a high frequency becomes larger than the threshold for a low frequency.

In the case where the sound pressure level remains the same, a high-frequency sound is unlikely to be perceived by someone than a low-frequency sound. Focusing attention on this tendency, in the configuration of the combustion noise suppression control apparatus as described above, the correction amount of the pilot injection amount can be made as small as possible while restraining an abnormal combustion noise from being perceived by someone, by setting the threshold for the high frequency larger than the threshold for the low frequency.

In the aforementioned combustion noise suppression control apparatus for the internal combustion engine, each of the plurality of the frequencies may include a frequency equal to or higher than 5 kHz. Conventionally, the control of reducing the combustion noise through the operation of the pilot injection amount is performed at a frequency lower than 5 kHz. However, the inventor has found out, from an analysis on an abnormal combustion noise in the internal combustion engine, that the abnormal combustion noise at the frequency equal to or higher than 5 kHz depends on the injection amount of pilot injection. In this view, the plurality of the frequencies include the frequency equal to or higher than 5 kHz, in the configuration of the combustion noise suppression control apparatus as described above.

Besides, in the aforementioned combustion noise suppression control apparatus for the internal combustion engine, the internal combustion engine may be equipped with a plurality of cylinders, and the in-cylinder pressure sensor may be provided in a specific one of the plurality of the cylinders. Also, the aforementioned combustion noise suppression control apparatus may include a micro injection learning process unit and an other-cylinder correction process unit. The micro injection learning process unit may be configured to learn an inter-cylinder correction amount for reducing a dispersion of an injection amount of fuel injection valves among the cylinders when the injection amount is equal to or smaller than a predetermined amount. The other-cylinder correction process unit may be configured to correct the pilot injection amount with a sum of a correction amount for correcting the pilot injection amount of the specific one of the cylinders by the pilot correction process unit and the inter-cylinder correction amount learned by the micro injection learning process unit, when pilot injection is carried out by the fuel injection valves that inject fuel into the cylinders other than the specific one of the cylinders.

The injection characteristics of the fuel injection valves can disperse as a result of the tolerance thereof. Then, when the injection characteristics disperse, the correction amount for correcting the pilot injection amount in the specific one of the cylinders may not be appropriate as the correction amount of the pilot injection amount in the cylinders that are not equipped with the in-cylinder pressure sensor. Thus, in the configuration of the combustion noise suppression control apparatus as described above, the operation amount (the injection amount) of each of the fuel injection valves is corrected with the learned in-cylinder correction amount, and the dispersion of the injection amount resulting from the dispersion of the injection characteristics is reduced. At the same time, the correction amount with which the pilot injection amount is corrected by the pilot correction process unit in the specific one of the cylinders is appropriated as the correction amount of the pilot injection amount in each of the cylinders that are not equipped with the in-cylinder pressure sensor. Thus, the sound pressure level of an abnormal combustion noise resulting from pilot injection can be appropriately reduced in the cylinders that are not equipped with the in-cylinder pressure sensor.

Furthermore, the aforementioned combustion noise suppression control apparatus for the internal combustion engine may include an air-fuel ratio process unit and an air-fuel ratio correction process unit. The air-fuel ratio process unit may be configured to control an air-fuel ratio in a combustion chamber of the internal combustion engine to a variably set target value, using an opening degree of a throttle valve as an operation amount. The air-fuel ratio correction process unit may be configured to variably set the pilot injection amount by correcting the pilot injection amount in accordance with the air-fuel ratio that is controlled to the target value by the air-fuel ratio process unit. The pilot correction process unit may be configured to carry out a correction of the pilot injection amount based on an excess over the threshold, when a correction is carried out by the air-fuel ratio correction process unit.

In the configuration of the combustion noise suppression control apparatus as described above, the air-fuel ratio as a controlled variable is controlled using the opening degree of the throttle valve as the operation amount, by the air-fuel ratio process unit. Accordingly, in the case where the target value is variably set, the actual air-fuel ratio is controlled to the target value through the operation of the opening degree of the throttle valve.

By the way, even when the pilot injection amount remains the same, the sound pressure level resulting from the combustion of fuel of pilot injection fluctuates depending on the air-fuel ratio. Therefore, in the case where although the current target value has deviated from the target value of the air-fuel ratio at the time of pilot injection intended for calculation of the sound pressure level by the sound pressure level calculation process unit, pilot injection is carried out based on the pilot injection amount corrected by the pilot correction process unit without taking the deviation of the target value into account, it may be impossible to sufficiently suppress an abnormal combustion noise. It should be noted herein that the pilot injection amount that is appropriate in suppressing the abnormal combustion noise tends to increase as the air-fuel ratio is enriched. In this respect, in the configuration of the combustion noise suppression control apparatus as described above, the correction amount used by the air-fuel ratio correction process unit and the correction amount based on the threshold are used in combination. Therefore, even in the case where the current target value has deviated from the target value of the air-fuel ratio at the time of pilot injection intended for calculation of the sound pressure level by the sound pressure level calculation process unit, the abnormal combustion noise can be sufficiently suppressed by the pilot injection amount corrected by the pilot correction process unit.
Particular aspects of the invention are set out in the appended claims.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a configuration view of a system that is equipped with a combustion noise suppression control apparatus according to the first embodiment as an example of the invention;
FIG. 2 is a block diagram showing an abnormal combustion noise suppression process according to the embodiment of the invention;
FIG. 3 is a flowchart showing a processing procedure of a combustion noise correction amount calculation process unit according to the embodiment of the invention;
FIGS. 4A, 4B and 4C are views exemplifying a combustion noise that is transmitted to the outside as a result of pilot injection for an internal combustion engine in the embodiment of the invention;
FIG. 5 is a configuration view of a system that is equipped with a combustion noise suppression control apparatus according to the second embodiment as an example of the invention; and
FIG. 6 is a block diagram showing an abnormal combustion noise suppression process according to the embodiment of the invention.

### DETAILED DESCRIPTION OF EMBODIMENTS

A combustion noise suppression control apparatus for an internal combustion engine according to the first embodiment of the invention will be described hereinafter with reference to the drawings.

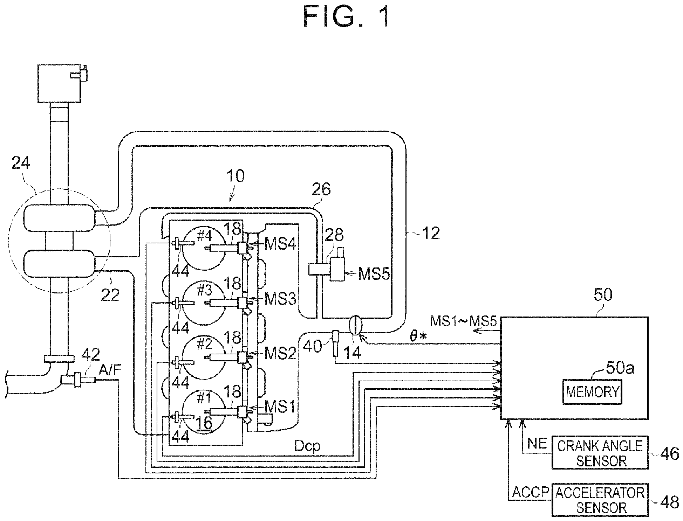

An internal combustion engine 10 shown in FIG. 1 is a compression ignition internal combustion engine (a diesel engine) that uses gas oil as fuel. An intake passage 12 of the internal combustion engine 10 is provided with a throttle valve 14 that adjusts the flow channel cross-sectional area of the intake passage 12. Air sucked into the intake passage 12 is sucked into combustion chambers 16 of respective cylinders (the first to fourth cylinders #1 to #4 are exemplified herein). Besides, injection ports of fuel injection valves 18 project into the combustion chambers 16 respectively. Then, the mixture of the air (oxygen) sucked into the combustion chambers 16 and the fuel injected from the fuel injection valves 18 is burned as the volume of the combustion chambers 16 decreases. Then, the mixture burned in the combustion chambers 16 is discharged to an exhaust passage 22 as exhaust gas.

The intake passage 12 and the exhaust passage 22 are provided with a supercharger 24. Besides, an exhaust gas recirculating flow passage 26 through which the intake passage 12 and the exhaust passage 22 communicate with each other is connected to the intake passage 12 and the exhaust passage 22. Also, the exhaust gas recirculating flow passage 26 is provided with an EGR valve 28 that adjusts the flow channel cross-sectional area thereof.

An airflow meter 40 that detects the flow rate of fluid is provided downstream of the throttle valve 14 in the intake passage 12. Besides, an air-fuel ratio sensor 42 that detects the air-fuel ratio in the combustion chambers 16 based on components in exhaust gas is provided downstream of the supercharger 24 in the exhaust passage 22. Incidentally, in FIG. 1, the output value of the air-fuel ratio sensor 42 is denoted by "A/F". Besides, the combustion chambers 16 of the first to fourth cylinders #1 to #4 are equipped with in-cylinder pressure sensors 44 that detects the in-cylinder pressures thereof, respectively. A system shown in FIG. 1 is further equipped with a crank angle sensor 46 that detects a rotational speed NE of a crankshaft of the internal combustion engine 10, an accelerator sensor 48 that detects the depression amount (an operation amount ACCP) of an accelerator pedal, and the like.

A control apparatus 50 is a control apparatus that is designed to control the internal combustion engine 10 and that operates various actuators such as the fuel injection valves 18, the EGR valve 28, the throttle valve 14 and the like in order to control the controlled variables of the internal combustion engine 10. The control apparatus 50 is equipped with a memory 50a. In particular, the control apparatus 50 is a combustion noise suppression control apparatus that regards an abnormal combustion noise resulting from the combustion of fuel in the combustion chambers 16 of the internal combustion engine 10 as one of the aforementioned controlled variables, and that suppresses and controls this abnormal combustion noise. This will be described hereinafter in detail.

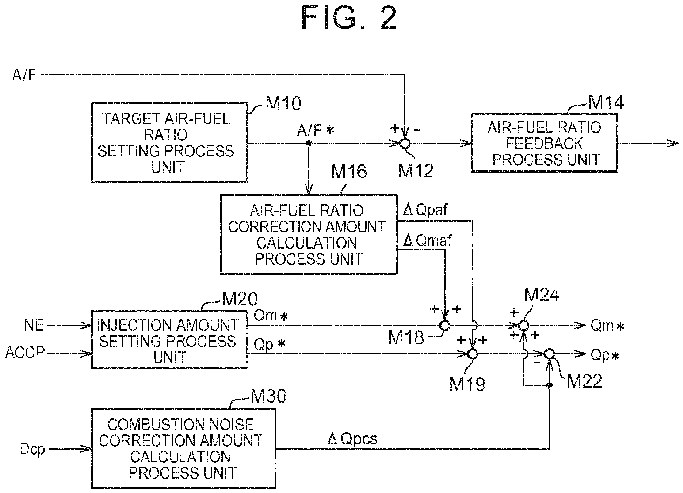

FIG. 2 shows some of the processes that are executed by the control apparatus 50. A target air-fuel ratio setting process unit M10 shown in FIG. 2 variably sets a target value A/F* of the output value A/F of the air-fuel ratio sensor 42. A deviation calculation unit M12 outputs a value that is obtained by subtracting the output value A/F from the target value A/F*. An air-fuel ratio feedback process unit M14 operates a command value θ* of the opening degree of the throttle valve 14 in order to feedback-control the output vale A/F to the target value A/F* based on the output of the deviation calculation unit M12. When the command value θ* is set, the actual opening degree of the throttle valve 14 is electronically controlled by the control apparatus 50, such that the command value θ* is obtained.

An injection amount setting process unit M20 sets an amount of fuel injected by the fuel injection valves 18, based on the rotational speed NE and the operation amount ACCP of the accelerator pedal, and outputs a command value of the injection amount of pilot injection (a pilot injection amount Qp*) and a command value of the injection amount of main injection (a main injection amount Qm*) in accordance with the set amount of fuel. It should be noted herein that main injection is fuel injection with a maximum amount of fuel among the kinds of fuel injection that is carried out a plurality of times on a time-division basis in the combustion chamber 16 of one of the cylinders in one combustion cycle (four strokes). On the other hand, pilot injection is carried out prior to main injection among the kinds of fuel injection that is carried out a plurality of times on the aforementioned time-division basis.

It should be noted herein that the main injection amount Qm* and the pilot injection amount Qp* are adapted to satisfy various requirement elements. For example, the pilot injection amount Qp* is adapted to satisfy the requirement element of controlling the rising of a sound resulting from the combustion of fuel of main injection, and the requirement element of suppressing a combustion noise resulting from the combustion of fuel of pilot injection itself, by controlling the temperature in the combustion chamber 16 prior to main injection. Specifically, the main injection amount Qm* and the pilot injection amount Qp* are adapted to satisfy various requirement elements in cooperation with the adaptation to the injection timing of main injection and the adaptation to the injection timing of pilot injection.

Incidentally, in the present embodiment of the invention, the main injection amount Qm* and the pilot injection amount Qp* that are output by the injection amount setting process unit M20 are adapted to satisfy various requirement elements, on the premise that the target value A/F* is a reference value. That is, for example, even when the pilot injection amount Qp* remains the same, the magnitude of an abnormal combustion noise differs depending on the air-fuel ratio. Therefore, if the target value A/F* differs, the pilot injection amount Qp* that is appropriate in confining the abnormal combustion noise within a permissible range differs as well. Accordingly, in the present embodiment of the invention, the main injection amount Qm* and the pilot injection amount Qp* are adapted on the premise that the target value A/F* is an appropriately determined reference value.

An air-fuel ratio correction amount calculation process unit M16 calculates an air-fuel ratio correction amount ΔQmaf of the main injection amount Qm* and an air-fuel ratio correction amount ΔQpaf of the pilot injection amount Qp*, based on the target value A/F* set by the target air-fuel ratio setting process unit M10. This is a process that takes into account that the main injection amount Qm* and the pilot injection amount Qp*, which are output by the injection amount setting process unit M20, premise that the target value A/F* is a reference value. That is, the air-fuel ratio correction amount ΔQmaf of the main injection amount Qm* is a correction amount for correcting the main injection amount Qm* that is output by the injection amount setting process unit M20 in such a manner as to satisfy various requirement elements when the output value A/F is controlled to the target value A/F* to become equal to the target value A/F*. Besides, the air-fuel ratio correction amount ΔQpaf of the pilot injection amount Qp* is a correction amount for correcting the pilot injection amount Qp* that is output by the injection amount setting process unit M20 in such a manner as to satisfy various requirement elements when the output value A/F is controlled to the target value A/F* to become equal to the target value A/F*.

In the present embodiment of the invention in particular, the air-fuel ratio correction amount ΔQpaf of the pilot injection amount Qp* is a correction amount for making the pilot injection amount Qp* equal to such an amount that the abnormal combustion noise resulting from pilot injection does not become excessively loud, when the output value A/F is controlled to the target value A/F* to become equal to the target value A/F*. Specifically, the pilot injection amount Qp* that is appropriate in suppressing the abnormal combustion noise is larger when the air-fuel ratio is rich than when the air-fuel ratio is lean. Therefore, the air-fuel ratio correction amount ΔQpaf is set to a larger value when the air-fuel ratio is rich than when the air-fuel ratio is lean. Incidentally, it is desirable to set the air-fuel ratio correction amount ΔQpaf in consideration of at least one of the amount of air, the main injection amount Qm* and the pilot injection amount Qp*.

A main-side air-fuel ratio correction unit M18 corrects the main injection amount Qm* that is output by the injection amount setting process unit M20, with the air-fuel ratio correction amount ΔQmaf, and outputs the corrected value. A pilot-side air-fuel ratio correction unit M19 corrects the pilot injection amount Qp* that is output by the injection amount setting process unit M20, with the air-fuel ratio correction amount ΔQpaf, and outputs the corrected value.

A combustion noise correction amount calculation process unit M30 calculates a combustion noise correction amount ΔQpcs of the main injection amount Qm* and the pilot injection amount Qp* based on in-cylinder pressure data Dcp that are output by the in-cylinder pressure sensors 44, and outputs the calculated combustion noise correction amount ΔQpcs. Incidentally, in the present embodiment of the invention, the combustion noise correction amount calculation process unit M30 outputs the combustion noise correction amount ΔQpcs for each of the cylinders, based on the in-cylinder pressure data Dcp that are output by each of the in-cylinder pressure sensors 44 that are provided in the cylinders respectively. However, FIG. 2 shows only the process regarding one of the cylinders.

A pilot-side combustion noise correction process unit M22 corrects the pilot injection amount Qp* by subtracting the combustion noise correction amount ΔQpcs from the pilot injection amount Qp*. Then, the control apparatus 50 operates the fuel injection valves 18 such that the injection amount of pilot injection becomes equal to the pilot injection amount Qp* thus corrected. Thus, the injection amount of pilot injection from the fuel injection valves 18 is obtained by correcting the pilot injection amount Qp* set by the injection amount setting process unit M20, with the air-fuel ratio correction amount ΔQpaf and the combustion noise correction amount ΔQpcs.

On the other hand, a main-side combustion noise correction process unit M24 corrects the main injection amount Qm* by adding the combustion noise correction amount ΔQpcs to the main injection amount Qm*. It should be noted herein that the combustion noise correction amount ΔQpcs is added with a view to preventing the sum of the main injection amount Qm* and the pilot injection amount Qp* from changing before and after the correction with the combustion noise correction amount ΔQpcs. Then, the control apparatus 50 operates the fuel injection valves 18 such that the injection amount of main injection becomes equal to the main injection amount Qm* thus corrected. Thus, the injection amount of main injection from the fuel injection valves 18 is obtained by correcting the main injection amount Qm* set by the injection amount setting process unit M20, with the air-fuel ratio correction amount ΔQmaf and the combustion noise correction amount ΔQpcs.

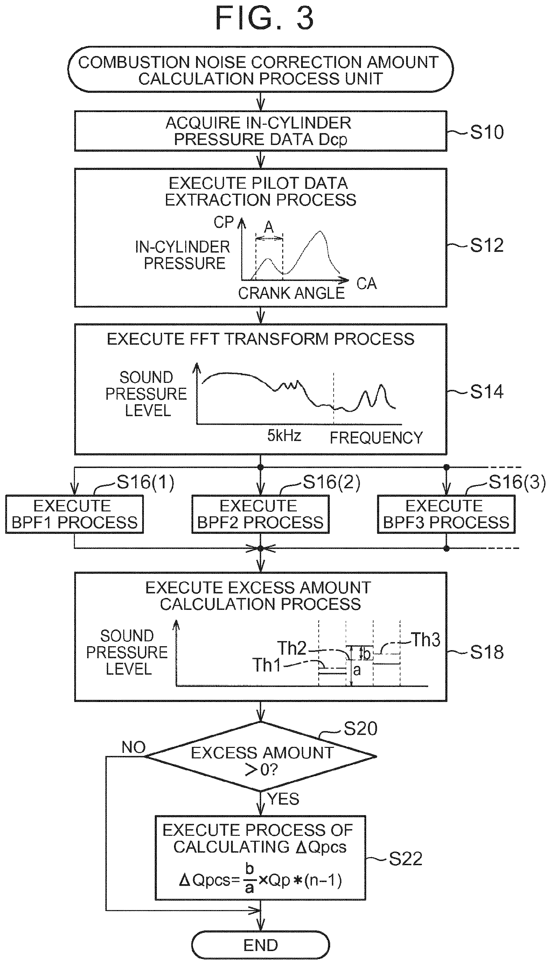

FIG. 3 shows a processing procedure of the combustion noise correction amount calculation process unit M30. This process is repeatedly executed, for example, on a predetermined cycle by the combustion noise correction amount calculation process unit M30. Incidentally, the predetermined cycle mentioned herein is a value longer than the cycle of updating the target value A/F* by the target air-fuel ratio setting process unit M10 shown in FIG. 2.

In this series of processes, the combustion noise correction amount calculation process unit M30 first acquires the in-cylinder pressure data Dcp (S10). Incidentally, the in-cylinder pressure data Dcp are acquired from each of the first to fourth cylinders #1 to #4. However, a description will be given herein as to a specific one of the cylinders as an example.

Subsequently, the combustion noise correction amount calculation process unit M30 extracts an in-cylinder pressure CP resulting from the combustion of fuel of pilot injection, from a relationship between a crank angle CA and the in-cylinder pressure, which is indicated by the in-cylinder pressure data Dcp (S12). This may be, for example, a process of setting a specific crank angle range A in accordance with an injection start timing and an injection end timing of pilot injection and extracting the in-cylinder pressure CP within the crank angle range A. Nonetheless, this should not be the only method of setting the specific crank angle range A. For example, the specific crank angle range A may be set based on detection of a local maximum value of in-cylinder pressure waveforms indicated by the in-cylinder pressure data Dcp.

Subsequently, the combustion noise correction amount calculation process unit M30 subjects the in-cylinder pressure CP resulting from the combustion of fuel of pilot injection to Fourier transform, and generates a frequency distribution of a sound pressure level (dB) (S14). Then, the combustion noise correction amount calculation process unit M30 executes bandpass filter processes at a plurality of frequencies especially in a frequency range of "5 kHz to 10 kHz", as to the data subjected to Fourier transform (S16(1), S16(2), S16(3), ...). In FIG. 3, the filter processes by bandpass filters whose transmission frequency bands are different from one another are referred to as a BPF1 process, a BPF2 process, a BPF3 process, ... respectively. Incidentally, each of the bandpass filter processes allows selective transmission of a predetermined frequency band. In this case, however, each of the bandpass filter processes is associated with a frequency corresponding to a median of the transmission frequency band. That is, the execution of each of the bandpass filter processes at a predetermined frequency means the execution of a bandpass filter process in which the predetermined frequency is the median of the transmission frequency band.

It should be noted herein that attention is focused on the frequency equal to or higher than "5 kHz" because the frequency in this range can be the resonant frequency of pieces of hardware such as a cylinder block and the like. Incidentally, in the present embodiment of the invention, 1/3 octave filters are adopted as the bandpass filters.

Then, the combustion noise correction amount calculation process unit M30 calculates amounts of excess of sound pressure levels output through the BPF1 process, the BPF2 process, the BPF3 process, ... respectively, over thresholds Th1, Th2, Th3, ... independently set for the transmission frequency bands corresponding to the BPF1 process, the BPF2 process, the BPF3 process, ... respectively (S18). Thus, the thresholds Th1, Th2, Th3, ... are set for the frequencies as the medians of the transmission frequency bands of the BPF1 process, the BPF2 process, the BPF3 process, ... respectively. In other words, the thresholds are set for the frequencies as the medians of the transmission frequency bands of the BPF1 process, the BPF2 process, the BPF3 process, ... independently of one another. Incidentally, the thresholds Th1, Th2, Th3, ... are stored in advance into the memory 50a shown in FIG. 1.

In concrete terms, the combustion noise correction amount calculation process unit M30 first compares the magnitudes of the sound pressure levels output through the BPF1 process, the BPF2 process, the BPF3 process, ... with the magnitudes of the thresholds Th1, Th2, Th3, ... independently set for the transmission frequency bands of the BPF1 process, the BPF2 process, the BPF3 process, respectively. Then, when at least one of the thresholds Th1, Th2, Th3, ... is exceeded, the combustion noise correction amount calculation process unit M30 calculates an excess amount. It should be noted herein that the thresholds Th1, Th2, Th3, ... are set in such a manner as to increase as the frequency rises as shown in FIG. 3, in the present embodiment of the invention.

Incidentally, FIG. 3 exemplifies a case where the sound pressure level of the transmission frequency band of the BPF2 process exceeds the threshold Th2 by an excess amount b. Incidentally, when none of the thresholds Th1, Th2, Th3, ... are exceeded, the excess amount is set to 0.

Subsequently, the combustion noise correction amount calculation process unit M30 determines whether or not the maximum of the excess amounts calculated in the process of step S18 is larger than zero (S20). This process is designed to determine whether to calculate the combustion noise correction amount ΔQpcs or not.

Then, if it is determined that the maximum of the excess amounts is larger than zero (YES in S20), the combustion noise correction amount calculation process unit M30 calculates the combustion noise correction amount ΔQpcs (S22). In concrete terms, the combustion noise correction amount calculation process unit M30 calculates the combustion noise correction amount ΔQpcs by multiplying a value that is obtained by dividing the excess amount b by the sound pressure level ("a" indicated in S18 of FIG. 3) corresponding to the frequency at which the threshold is exceeded, by a pilot injection amount Qp*(n-1) intended for calculation of this excess amount. Incidentally, in the case where the pilot injection amount Qp* that is corrected with this combustion noise correction amount ΔQpcs is referred to a current pilot injection amount Qp*(n), the pilot injection amount Qp* that is used to calculate the combustion noise correction amount ΔQpcs is the last one, and hence is affixed with "n-1". It should be noted, however, that when a time longer than one cycle (four strokes) is required for the process of calculating the combustion noise correction amount ΔQpcs, the pilot injection amount Qp* that is used to calculate the combustion noise correction amount ΔQpcs for correcting the pilot injection amount Qp*(n) may be changed. That is, the combustion noise correction amount ΔQpcs may be calculated using a pilot injection amount Qp*(n-k) preceding the pilot injection amount Qp*(n) a plurality of times (it should be noted, however, that k > 1).

Incidentally, if the process of step S22 is completed or the result of the determination in step S20 is negative, the combustion noise correction amount calculation process unit M30 ends this series of processes. Incidentally, in the process of the aforementioned step S18, when there are a plurality of frequencies at which the thresholds Th1, Th2, Th3, ... are exceeded, the combustion noise correction amount ΔQpcs may be calculated based on the frequency at which the excess amount is maximized.

The operation of the present embodiment of the invention will now be described. For example, the control apparatus 50 performs the operation of the fuel injection valve 18 based on the pilot injection amount Qp* and the main injection amount Qm* in the first cylinder #1, and then calculates the current pilot injection amount Qp*(n) and the current main injection amount Qm*(n), regarding the pilot injection amount Qp* and the main injection amount Qm* as the last injection amounts (the pilot injection amount Qp*(n-1) and the main injection amount Qm*(n-1)).

It should be noted herein that the control apparatus 50 calculates the combustion noise correction amount ΔQpcs based on a combustion noise resulting from the last pilot injection amount Qp*(n-1), and corrects the pilot injection amount Qp* set by the injection amount setting process unit M20, based on the combustion noise correction amount ΔQpcs.

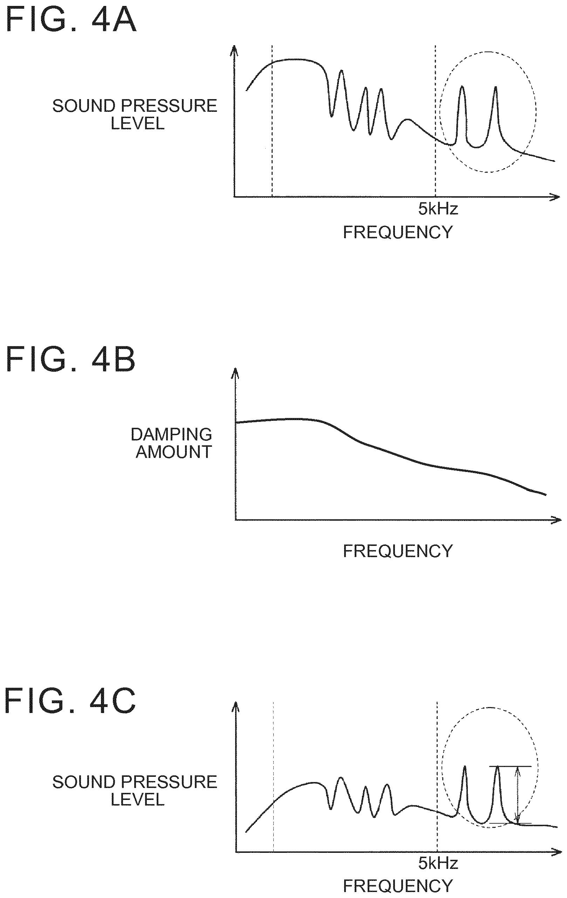

FIG. 4A shows an exemplary result of a Fourier transform process of the sound pressure level (dB) resulting from pilot injection. Besides, FIG. 4B shows damping characteristics of sound waves (a frequency distribution of damping amounts (dB)) at the time of their transmission through the pieces of hardware such as the cylinder block and the like of the internal combustion engine 10 according to the present embodiment of the invention. As shown in FIG. 4B, the damping amount depends on the frequency.

FIG. 4C shows a frequency distribution of the sound pressure level after the sound pressure level resulting from pilot injection used in FIG. 4A has been damped by the pieces of hardware having the damping characteristics shown in FIG. 4B. This is the frequency distribution of the sound pressure level of a sound that reaches the ears of a user as a result of pilot injection used in FIG. 4A, in a hardware configuration according to the present embodiment of the invention. As shown in FIG. 4C, the amount of drop in the sound pressure level from that shown in FIG. 4A is larger at low frequencies than at high frequencies. This results from the fact that the damping amount is large at low frequencies as shown in FIG. 4B. FIGS. 4A and 4C reveal that it is desirable to take the amount of damping by hardware into account instead of directly using the output values of the in-cylinder pressure sensors 44 when it comes to a sound reaching the ears of the user.

It should be noted herein that the combustion noise correction amount ΔQpcs is a correction amount for suppressing the sound pressure level in the range equal to or higher than "5 kHz" when this sound pressure level is high. The range equal to or higher than "5 kHz" encompasses the resonant frequencies of the pieces of hardware such as the cylinder block and the like. The resonant frequency deviates as a result of the fact that the dispersion among the pre-ignition temperatures in the combustion chambers 16 increases due to tolerances and aging of the pieces of hardware and also an increase in the amount of EGR, and the like. Also, it is uncertain whether the resonant frequency deviates on the low frequency side or on the high frequency side, as well as how much the resonant frequency deviates. Therefore, even when the pilot injection amount Qp* that is set by the injection amount setting process unit M20, the injection interval between pilot injection and main injection and the like are adapted, the abnormal combustion noise that can be perceived by the user may increase due to the deviation of the resonant frequency.

Thus, as for the sound pressure level in the range equal to or higher than "5 kHz", the control apparatus 50 operates the combustion noise correction amount ΔQpcs in order to feed-back control the sound pressure level, in addition to adapting the pilot injection amount Qp* that is set by the injection amount setting process unit M20, the injection interval between pilot injection and main injection, and the like.

In this case, when the combustion noise correction amount ΔQpcs becomes excessively large, the actual pilot injection amount Qp* greatly deviates from the pilot injection amount Qp* that is set by the injection amount setting process unit M20. Then, the pilot injection amount Qp* that is set by the injection amount setting process unit M20 is adapted to satisfy various requirement elements such as the combustion speed of main injection and the like as well as the combustion noise resulting from the combustion of fuel of pilot injection itself. Therefore, when the combustion noise correction amount ΔQpcs becomes excessively large, there arises an apprehension that those requirement elements may not be satisfied.

Thus, the control apparatus 50 independently sets the thresholds Th1, Th2, Th3, ... for the frequencies respectively. These thresholds Th1, Th2, Th3, ... are set based on the maximum value that is permitted in effectively restraining the user from perceiving an abnormal combustion noise. It should be noted herein that the permitted maximum value can deviate in accordance with the frequency firstly because the damping amount depends on the frequency as shown in FIG. 4B, and secondly because even the same sound pressure level is less likely to be perceived by the user at high frequencies than at low frequencies. By independently setting the thresholds Th1, Th2, Th3, ... for the frequencies respectively, the thresholds Th1, Th2, Th3, ... can be made as close as possible to the maximum value that is permitted in effectively restraining the user from perceiving an abnormal combustion noise. The pilot injection amount Qp* can be more restrained from being corrected although the actual sound pressure level is a permitted sound pressure level, in the case where the thresholds Th1, Th2, Th3, ... are made as close as possible to the aforementioned permitted maximum value than in the case where the thresholds Th1, Th2, Th3, ... are set to somewhat small values without being made as close as possible to the aforementioned permitted maximum value.

According to the present embodiment of the invention described above, the following effects are obtained.
(1) The thresholds Th1, Th2, Th3, ... are independently set for the plurality of the frequencies, and the pilot injection amount Qp* is corrected when the actual sound pressure level exceeds at least one of the thresholds. Therefore, it is possible to make suppression of the perception of an abnormal combustion noise by the user and suppression of the correction of the pilot injection amount Qp* compatible with each other as much as possible.
   Incidentally, in performing the control of lowering the sound pressure level at a specific frequency, two physical quantities, namely, the pilot injection amount Qp* and the injection timing can be operation amounts. However, in the case where the injection timing is adopted as an operation amount, the sound pressure level can be lowered, but the distribution of the sound pressure level also changes remarkably. Therefore, the tone changes remarkably.
   Incidentally, it is also conceivable to provide a sound insulating/absorbing material instead of using the combustion noise correction amount ΔQpcs. However, in the case of the sound insulating/absorbing material, the sound pressure level is uniformly lowered at the frequencies other than the actual resonant frequency. Therefore, the difference in sound pressure level between the resonant frequency and the frequencies other than the resonant frequency remains remarkable, and it may be impossible to sufficiently restrain the user from perceiving an abnormal combustion noise.
(2) The pilot injection amount Qp* is corrected with the combustion noise correction amount ΔQpcs that is set in such a manner as to increase as the excess amount increases. Thus, the sound pressure level can be controlled to or below the threshold in a shorter time than in the case where the pilot injection amount Qp* is reduced each time by a prescribed amount and is feedback-corrected until the sound pressure level becomes equal to or lower than the threshold.
(3) The combustion noise correction amount ΔQpcs is a value that is obtained by multiplying the ratio (b/a), which is obtained by dividing the excess amount (b in FIG. 3) by the sound pressure level (a in FIG. 3) at the frequency at which the threshold is exceeded, by the pilot injection amount. Thus, the sound pressure level can be controlled to or below the threshold in a shorter time than in the case where the pilot injection amount Qp* is reduced each time by the prescribed amount and is feedback-corrected until the sound pressure level becomes equal to or lower than the threshold.
(4) By setting the threshold larger at high frequencies than at low frequencies, the combustion noise correction amount ΔQpcs can be made as small as possible while restraining an abnormal combustion noise from being perceived by someone. This is because a high-frequency sound is less likely to be perceived by someone than a low-frequency sound when the sound pressure level remains the same.
(5) The pilot injection amount Qp* is corrected in accordance with the target value A/F*. Thus, even in the case where the target value A/F* is changed from the target value A/F* at the time of combustion when the in-cylinder pressure that is used to calculate the combustion noise correction amount ΔQpcs is generated, the abnormal combustion noise can be sufficiently suppressed by the pre-change combustion noise correction amount ΔQpcs. That is, in this case, as for the pilot injection amount that is appropriate in suppressing the abnormal combustion noise, the amount that fluctuates in accordance with the target value A/F* is the air-fuel ratio correction amount ΔQpaf, and the amount that is appropriate in suppressing the abnormal combustion noise resulting from a deviation of the resonant frequency is the combustion noise correction amount ΔQpcs.

Next, a combustion noise suppression control apparatus for an internal combustion engine according to the second embodiment of the invention will be described with reference to the drawings, focusing attention on the difference from the first embodiment of the invention.

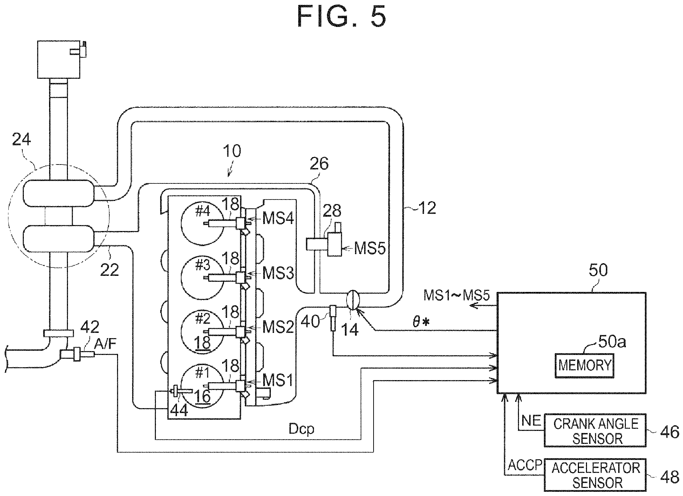

FIG. 5 is a configuration view of a system according to the present embodiment of the invention. In FIG. 5, members corresponding to those shown in FIG. 1 are denoted by the same reference symbols respectively, for the sake of convenience. As shown in FIG. 5, in the present embodiment of the invention, the in-cylinder pressure sensor 44 is provided only in the first cylinder #1.

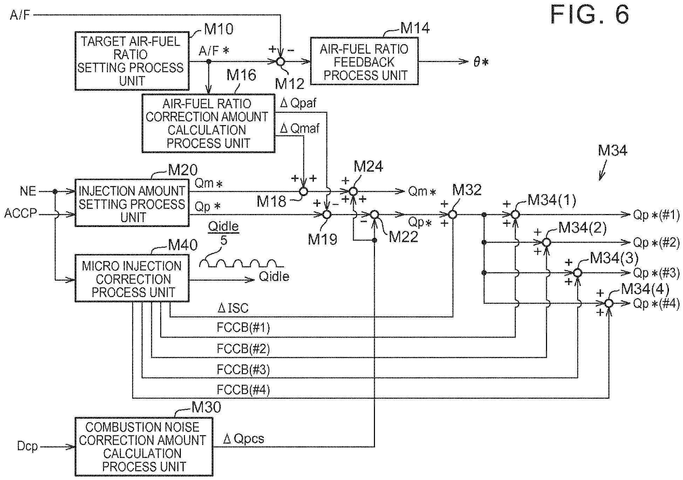

FIG. 6 shows some of the processes that are executed by the control apparatus 50 according to the present embodiment of the invention. Incidentally, in FIG. 6, processes corresponding to those shown in FIG. 2 are denoted by the same reference symbols respectively, for the sake of convenience.

A micro injection correction process unit M40 learns a deviation of the injection characteristics among the fuel injection valves 18 of the respective cylinders, namely, the first to fourth cylinders #1 to #4, and calculates a correction amount for correcting this deviation. That is, at the time of idling operation, the micro injection correction process unit M40 divides an injection amount Qidle at the time of idling into a plurality of (five as exemplified in FIG. 5) injection amounts, and carries out fuel injection a plurality of times in one combustion cycle (four strokes) from each of the cylinders at a predetermined injection interval. It should be noted herein that each of the injection amounts subjected to division is an injection amount that is approximately equal to the pilot injection amount Qp*. Then, when there is a deviation between a local maximum value of the rotational speed NE resulting from fuel injection in one of the plurality of the cylinders and a local maximum value of the rotational speed NE resulting from fuel injection in another one of the cylinders, the micro injection correction process unit M40 determines that there is a deviation between the fuel injection characteristics of the fuel injection valves 18 of those cylinders. Then, the micro injection correction process unit M40 calculates an inter-cylinder correction amount FCCB for correcting the deviation. In FIG. 6, the inter-cylinder correction amount FCCB of the first cylinder #1, the inter-cylinder correction amount FCCB of the second cylinder #2, ... are referred to as an inter-cylinder correction amount FCCB(#1), an inter-cylinder correction amount FCCB(#2), ... respectively. Besides, the micro injection correction process unit M40 calculates an average value correction amount ΔISC as an operation amount for feedback-controlling an average value that is obtained by smoothing fluctuations in the rotational speed Ne to a target rotational speed.

An average value correction process unit M32 corrects the pilot injection amount Qp* by adding the average value correction amount ΔISC to the pilot injection amount Qp*. An inter-cylinder correction process unit M34(1) corrects the pilot injection amount Qp* of the first cylinder #1 by adding the inter-cylinder correction amount FCCB(#1) to the pilot injection amount Qp*. By the same token, as for variables i = 2 to 4, an inter-cylinder correction process unit M34(i) corrects the pilot injection amount Qp* of an i-th cylinder #i by adding an inter-cylinder correction amount FCCB(#i) to the pilot injection amount Qp*.

Thus, the injection amount of pilot injection from the fuel injection valve 18 in the first cylinder #1 (the pilot injection amount Qp*(#1)) is obtained by correcting the pilot injection amount Qp* set by the injection amount setting process unit M20 with the air-fuel ratio correction amount ΔQpaf, the combustion noise correction amount ΔQpcs, the average value correction amount ΔISC and the inter-cylinder correction amount FCCB(#1). On the other hand, as for the variables i = 2 to 4, a pilot injection amount Qp*(#i) in the i-th cylinder #i is obtained by correcting the pilot injection amount Qp* set by the injection amount setting process unit M20 with the air-fuel ratio correction amount ΔQpaf, the combustion noise correction amount ΔQpcs, the average value correction amount ΔISC and the in-cylinder correction amount FCCB(#i).

It should be noted herein that the combustion noise correction amount ΔQpcs remains the same as to all the cylinders. That is, as for the second to fourth cylinders #2 to #4 that are not equipped with the in-cylinder pressure sensor 44 as well, the combustion noise correction amount ΔQpcs calculated based on the in-cylinder pressure data Dcp that are output by the in-cylinder pressure sensor 44 that is provided in the first cylinder #1 is appropriated.

According to the present embodiment of the invention described above, the following effect is obtained. (6) The pilot injection amounts Qp* of the second to fourth cylinders #2 to #4 that are not equipped with the in-cylinder pressure sensor 44 are corrected with the combustion noise correction amount ΔQpcs, while reducing the dispersion of the injection characteristics by the average value correction amount ΔISC and the inter-cylinder correction amounts FCCB. Thus, the sound pressure level of an abnormal combustion noise resulting from pilot injection in the cylinders that are not equipped with the in-cylinder pressure sensor 44 can be appropriately reduced using the combustion noise correction amount ΔQpcs.

Next, embodiments of the invention other than the first and second embodiments of the invention will be described.

"As for the sound pressure level calculation process unit (S12 to S16)" The sound pressure level calculation process unit is not absolutely required to extract only the frequencies equal to or higher than "5 kHz". The frequencies to be extracted may include frequencies lower than "5 kHz", for example, frequencies equal to or higher than "4 kHz" and lower than "5 kHz" or the like.

The bandpass filters that are used in the process of step S16 are not absolutely required to be 1/3 octave band filters, but may be 1/N octave band filters (N = 1, 2, 3, ...). Nonetheless, the use of the 1/N octave band filters is not indispensable, either.

Furthermore, the execution of the bandpass filter processes is not indispensable. For example, a process of extracting a sound pressure level at a predetermined frequency (a single value) may be executed.

"As for the excess amount calculation process unit (S18)" The excess amount calculation process unit is not absolutely required to gradually increase the threshold of the sound pressure level in each of the transmission frequency bands according to the bandpass filters in steps S16(1), S16(2), S16 (3), ... respectively as the frequency band rises. For example, the threshold may remain the same for some of the frequency bands.

"As for the correction process unit (S22, M30)" In the process of step S22, in the case where the combustion noise correction amount ΔQpcs is calculated based on the detection value of the in-cylinder pressure sensor 44 at the time when the pilot injection amount Qp* of fuel is injected, a value obtained by multiplying the pilot injection amount Qp* of the injected fuel by "b/a" is used as the combustion noise correction amount ΔQpcs, but the invention is not limited thereto. In view of the fact that the injection amount tends not to change very much as to the last pilot injection amount Qp*(n-1) and the current pilot injection amount Qp*(n), "(b/a)·Qp*(n)" may be used as the combustion noise correction amount ΔQpcs in step S22. Besides, instead of this process, a process of calculating a correction coefficient "(a-b)/a" based on the in-cylinder pressure data at the time of injection of the last pilot injection amount Qp*(n-1), adopting this calculated correction coefficient as a correction coefficient to be reflected by the current pilot injection amount Qp*(n), and multiplying the current pilot injection amount Qp*(n) that is set by the injection amount setting process unit M20 by the correction coefficient may be executed.

Besides, the use of the actual sound pressure level a as an operation parameter in calculating the correction amount (the correction coefficient) is not indispensable. In view of the fact that the sum of a threshold Thj (j = 1, 2, 3, ...) and the excess amount b is the sound pressure level a, for example, a one-dimensional map that determines a relationship between the excess amount b and the correction coefficient may be provided, and the correction coefficient may be calculated from the excess amount b and the one-dimensional map for each of the frequencies. Incidentally, in this case, the provision of the one-dimensional map for each of the frequencies corresponds to the independent setting of the thresholds for the plurality of the frequencies.

Furthermore, it is not indispensable either to variably set the single-time correction amount in accordance with the excess amount. For example, the initial value of the combustion noise correction amount ΔQpcs may be set to zero, and the combustion noise correction amount ΔQpcs may be increased by a prescribed amount determined in advance when the threshold for each of the frequencies is exceeded. Even in this case, the combustion noise correction amount ΔQpcs can be approximated to the value in each of the aforementioned embodiments of the invention by carrying out the correction a plurality of times.

Incidentally, when a change is made from a state where the sound pressure level is above the threshold to a state where the sound pressure level is below the threshold by the combustion noise correction amount ΔQpcs, the combustion noise correction amount ΔQpcs may be corrected to be reduced. This can be realized through the use of a controller that feedback-controls the excess amount b to the target value. That is, for example, a deviation between the excess amount b and the target value may be used as an input of an integral element, and an output value of the integral element may be used as the combustion noise correction amount ΔQpcs. In this case, the target value may be set to zero or a value slightly smaller than zero. Incidentally, the controller is not absolutely required to be equipped with only the integral element, but may be equipped with a proportional element or a differential element. In other words, a value obtained by adding the output value of the proportional element of the aforementioned deviation or the output value of the differential element of the aforementioned deviation to the output value of the integral element of the aforementioned deviation may be used as the combustion noise correction amount ΔQpcs.

"As for the micro injection learning process unit (M40)" In the aforementioned second embodiment of the invention, the inter-cylinder correction amounts FCCB are calculated in all the cylinders, but the invention is not limited thereto. For example, in the first cylinder #1 that is equipped with the in-cylinder pressure sensor 44, the inter-cylinder correction amount FCCB(1) may not be calculated. In this case, the inter-cylinder correction amounts FCCB(2) to FCCB(4) are calculated such that the local maximum values of the rotational speed NE resulting from fuel injection in the second to fourth cylinders #2 to #4 become close to the local maximum value of the rotational speed NE resulting from fuel injection in the first cylinder #1. Accordingly, this corresponds to the setting of the injection characteristics of the fuel injection valve 18 of the first cylinder #1 as reference characteristics in correcting the relative dispersion of the injection amount among the cylinders.

At the time of idling operation, the inter-cylinder correction amount is not absolutely required to be the operation amount for feedback-controlling the amount of fluctuations in the rotational speed of the crankshaft at the time when the amount of fuel injection is divided into a plurality of equal injection amounts and injected. For example, in the case where a fuel cutoff process is executed on the ground that the required value of an axial torque that is applied to driving wheels by the internal combustion engine becomes equal to zero, the inter-cylinder correction amount may be calculated exceptionally based on an amount of rise in the rotational speed of the crankshaft at the time when fuel injection equivalent to pilot injection is carried out once in one of the cylinders to burn fuel.

"As for the specific one of the cylinders (#1)" The specific one of the cylinders is not absolutely required to be the cylinder at either end of the cylinder block. Besides, it is not indispensable that only one of the plurality of the cylinders of the internal combustion engine be regarded as a specific cylinder. For example, in the configuration shown in FIG. 1, there may be adopted a configuration in which the first cylinder #1 and the fourth cylinder #4 are regarded as specific cylinders, these specific cylinders are equipped with in-cylinder pressure sensors 44 respectively, and the other cylinders are not equipped therewith.

"As for the other-cylinder correction process units (M22, M32, M34(2) to M34(4))" For example, in the case where there are a plurality of cylinders that are equipped with the in-cylinder pressure sensors 44, the pilot injection amount(s) of the cylinder(s) that is (are) not equipped with the in-cylinder pressure sensor(s) 44 may be corrected using the average value of the combustion noise correction amounts ΔQpcs that are calculated according to the in-cylinder pressure data Dcp obtained from the respective in-cylinder pressure sensors 44. Nonetheless, the invention is not limited to this configuration. The pilot injection amount(s) of the cylinder(s) that is (are) not equipped with the in-cylinder pressure sensor(s) 44 may be corrected with the combustion noise correction amount ΔQpcs that is calculated according to the in-cylinder pressure data Dcp obtained from one of the in-cylinder pressure sensors 44 with which the plurality of the cylinders are equipped respectively.

"As for the air-fuel ratio process unit (M14) and the air-fuel ratio correction process units (M18, M19)" The air-fuel ratio process unit M14 and the air-fuel ratio correction process units M18 and M19 are not absolutely required to operate the opening degree of the throttle valve 14 in order to feedback-control the output value A/F of the air-fuel ratio sensor 42 to the target value A/F*. For example, the air-fuel ratio process unit M14 and the air-fuel ratio correction process units M18 and M19 may be designed to perform open-loop control.

For example, if the update cycle of the target value A/F* and the update cycle of the combustion noise correction amount ΔQpcs are made to coincide with each other, the combustion noise correction amount ΔQpcs deviates from an appropriate amount as a result of a change in the target value A/F*, only once in changing the target value A/F*. Then, from the second pilot injection after the change, the combustion noise correction amount ΔQpcs corresponding to the post-change target value A/F* is used. Therefore, the abnormal combustion noise can be suppressed in a relatively good manner even when the air-fuel ratio correction amount ΔQpaf of the pilot injection amount Qp* is not calculated. Besides, the same holds true for the case where, for example, the injection amount setting process unit M20 sets the pilot injection amount Qp* based on the target value A/F* in addition to the operation amount ACCP of the accelerator pedal and the rotational speed NE.

Incidentally, the number of cylinders in the internal combustion engine is not limited to four. Besides, the internal combustion engine is not absolutely required to use gas oil as fuel.

## Claims

1. A combustion noise suppression control apparatus for an internal combustion engine (10) that corrects a pilot injection amount based on a detection value of an in-cylinder pressure sensor (44) that detects an in-cylinder pressure of the internal combustion engine (10), comprising:
a sound pressure level calculation process unit that is configured to calculate a frequency distribution of a sound pressure level resulting from combustion of fuel of a pilot injection, wherein an in-cylinder pressure resulting from the combustion of fuel of pilot injection is extracted from a relationship between a crank angle and the in-cylinder pressure and the frequency distribution of the sound pressure level is generated by subjecting the in-cylinder pressure resulting from the combustion of fuel of the pilot injection to Fourier transform;
a storage unit (50a) that is configured to store a predetermined threshold of the sound pressure level independently set for each of a plurality of frequencies; and
a pilot correction process unit that is configured to correct the pilot injection amount when the sound pressure level calculated by the sound pressure level calculation process unit exceeds the predetermined threshold at a frequency at which the predetermined threshold is set, wherein an excess amount calculation process unit that is configured to calculate an excess amount as an amount of excess over the threshold when the sound pressure level calculated by the sound pressure level calculation process unit exceeds the threshold at a frequency at which the threshold is set, wherein the pilot correction process unit is configured to correct the pilot injection amount such that the pilot injection amount decreases as the excess amount increases.

2. The combustion noise suppression control apparatus for the internal combustion engine (10) according to claim 1, **characterized in that**
the pilot correction process unit is configured to set a value that is obtained by multiplying a ratio by the pilot injection amount, as a decreasing correction amount of the pilot injection amount, the ratio being obtained by dividing the excess amount by a sound pressure level at a frequency at which the threshold is exceeded.

3. The combustion noise suppression control apparatus for the internal combustion engine (10) according to any one of claims 1 through 2, **characterized in that**
the threshold independently set for each of the plurality of the frequencies is set such that the threshold for a high frequency becomes larger than the threshold for a low frequency.

4. The combustion noise suppression control apparatus for the internal combustion engine (10) according to any one of claims 1 through 3, **characterized in that**
each of the plurality of the frequencies include a frequency equal to or higher than 5 kHz.

5. The combustion noise suppression control apparatus for the internal combustion engine (10) according to any one of claims 1 through 4, wherein
the internal combustion engine (10) is equipped with a plurality of cylinders, and
the in-cylinder pressure sensor (44) is provided in one of the plurality of the cylinders,
the combustion noise suppression control apparatus is **characterized by** further comprising:
a micro injection learning process unit that is configured to learn an inter-cylinder correction amount for reducing a dispersion of an injection amount of fuel injection valves (18) among the cylinders when the injection amount is equal to or smaller than a predetermined amount; and
an other-cylinder correction process unit that is configured to correct the pilot injection amount with a sum of a correction amount for correcting the pilot injection amount of the specific one of the cylinders by the pilot correction process unit and the inter-cylinder correction amount learned by the micro injection learning process unit, when pilot injection is carried out by the fuel injection valves (18) that inject fuel into the cylinders other than the specific one of the cylinders.

6. The combustion noise suppression control apparatus for the internal combustion engine (10) according to any one of claims 1 through 5, **characterized by** further comprising:
an air-fuel ratio process unit that is configured to control an air-fuel ratio in a combustion chamber of the internal combustion engine (10) to a variably set target value, using an opening degree of a throttle valve as an operation amount; and
an air-fuel ratio correction process unit that is configured to variably set the pilot injection amount by correcting the pilot injection amount in accordance with the air-fuel ratio that is controlled to the target value by the air-fuel ratio process unit,
wherein the pilot correction process unit is configured to carry out a correction of the pilot injection amount based on an excess over the threshold, when a correction is carried out by the air-fuel ratio correction process unit.

## Patentansprüche

1. Verbrennungsgeräuschunterdrückungs-Steuervorrichtung für eine Brennkraftmaschine (10), die eine Voreinspritzungsmenge anhand eines Detektionswertes eines Zylinderinnendrucksensors (44), der einen Zylinderinnendruck der Brennkraftmaschine (10) detektiert, korrigiert und Folgendes umfasst:
eine Schalldruckpegelberechnungs-Prozesseinheit, die konfiguriert ist, eine Frequenzverteilung eines Schalldruckpegels, die sich aus der Verbrennung von Kraftstoff einer Voreinspritzung ergibt, zu berechnen, wobei ein Zylinderinnendruck, der sich aus der Verbrennung von Kraftstoff der Voreinspritzung ergibt, aus einer Beziehung zwischen einem Kurbelwinkel und dem Zylinderinnendruck extrahiert wird und die Frequenzverteilung des Schalldruckpegels durch Anwenden einer Fourier-Transformation auf den Zylinderinnendruck, der sich aus der Verbrennung von Kraftstoff der Voreinspritzung ergibt, erzeugt wird;
eine Speichereinheit (50a), die konfiguriert ist, einen vorgegebenen Schwellenwert des Schalldruckpegels, der für jede von mehreren Frequenzen unabhängig eingestellt wird, zu speichern; und
eine Vorsteuerkorrektur-Prozesseinheit, die konfiguriert ist, die Voreinspritzungsmenge zu korrigieren, wenn der durch die Schalldruckpegelberechnungs-Prozesseinheit berechnete Schalldruckpegel den vorgegebenen Schwellenwert bei einer Frequenz, bei der der vorgegebene Schwellenwert eingestellt wird, überschreitet, wobei eine Überschussmengenberechnungs-Prozesseinheit, die konfiguriert ist, eine Überschussmenge als eine Menge, um die der Schwellenwert überschritten wird, zu berechnen, wenn der durch die Schalldruckpegelberechnungs-Prozesseinheit berechnete Schalldruckpegel den Schwellenwert bei einer Frequenz, bei der der Schwellenwert eingestellt wird, überschreitet, wobei die Vorsteuerkorrektur-Prozesseinheit konfiguriert ist, die Voreinspritzungsmenge in der Weise zu korrigieren, dass die Voreinspritzungsmenge mit zunehmender Überschussmenge abnimmt.

2. Verbrennungsgeräuschunterdrückungs-Steuervorrichtung für Brennkraftmaschine (10) nach Anspruch 1, **dadurch gekennzeichnet, dass**
die Vorsteuerkorrektur-Prozesseinheit konfiguriert ist, einen Wert, der durch Multiplizieren eines Verhältnisses mit der Voreinspritzungsmenge erhalten wird, als einen abnehmenden Korrekturbetrag der Voreinspritzungsmenge einzustellen, wobei das Verhältnis durch Dividieren der Überschussmenge durch einen Schalldruckpegel bei einer Frequenz, bei der der Schwellenwert überschritten wird, erhalten wird.

3. Verbrennungsgeräuschunterdrückungs-Steuervorrichtung für Brennkraftmaschine (10) nach einem der Ansprüche 1 bis 2, **dadurch gekennzeichnet, dass**
der Schwellenwert, der für jede der mehreren Frequenzen unabhängig eingestellt wird, in der Weise eingestellt ist, dass der Schwellenwert für eine hohe Frequenz höher als der Schwellenwert für eine niedrige Frequenz wird.

4. Verbrennungsgeräuschunterdrückungs-Steuervorrichtung für Brennkraftmaschine (10) nach einem der Ansprüche 1 bis 3, **dadurch gekennzeichnet, dass**
jede der mehreren Frequenzen eine Frequenz enthält, die gleich oder höher als 5 kHz ist.

5. Verbrennungsgeräuschunterdrückungs-Steuervorrichtung für Brennkraftmaschine (10) nach einem der Ansprüche 1 bis 4, wobei
die Brennkraftmaschine (10) mehrere Zylinder besitzt und
der Zylinderinnendrucksensor (44) in einem der mehreren Zylinder vorgesehen ist,
wobei die Verbrennungsgeräuschunterdrückungs-Steuervorrichtung ferner **gekennzeichnet ist durch**:
eine Mikroeinspritzungslernen-Prozesseinheit, die konfiguriert ist, einen Korrekturbetrag zwischen den Zylindern zu lernen, um eine Streuung einer Einspritzmenge von Kraftstoffeinspritzventilen (18) zwischen den Zylindern zu verringern, wenn die Einspritzmenge gleich oder kleiner als eine vorgegebenen Menge ist; und
eine Prozesseinheit für die Korrektur anderer Zylinder, die konfiguriert ist, die Voreinspritzmenge mit einer Summe aus einem Korrekturbetrag zum Korrigieren der Voreinspritzmenge des bestimmten Zylinders **durch** die Vorsteuerungskorrektur-Prozesseinheit und aus dem Korrekturbetrag zwischen den Zylindern, der **durch** die Mikroeinspritzungslernen-Prozesseinheit gelernt wird, zu korrigieren, wenn die Voreinspritzung **durch** die Kraftstoffeinspritzventile (18), die Kraftstoff in die von dem bestimmten Zylinder verschiedenen Zylinder einspritzen, ausgeführt wird.

6. Verbrennungsgeräuschunterdrückungs-Steuervorrichtung für Brennkraftmaschine (10) nach einem der Ansprüche 1 bis 5, ferner **gekennzeichnet durch**:
eine Luft/Kraftstoff-Verhältnis-Prozesseinheit, die konfiguriert ist, ein Luft/Kraftstoff-Verhältnis in einer Verbrennungskammer der Brennkraftmaschine (10) unter Verwendung eines Öffnungsgrades einer Drosselklappe auf einen veränderlich eingestellten Sollwert als einen Arbeitsbetrag zu steuern; und
eine Luft/Kraftstoff-Verhältniskorrektur-Prozesseinheit, die konfiguriert ist, die Vorsteuermenge durch Korrigieren der Vorsteuermenge in Übereinstimmung mit dem Luft/Kraftstoff-Verhältnis, das durch die Luft/Kraftstoff-Verhältnis-Prozesseinheit auf den Sollwert gesteuert wird, veränderlich einzustellen,
wobei die Vorsteuerkorrektur-Prozesseinheit konfiguriert ist, eine Korrektur der Vorsteuerungseinspritzmenge anhand eines Überschusses über dem Schwellenwert auszuführen, wenn eine Korrektur durch die Luft/Kraftstoff-Verhältniskorrektur-Prozesseinheit ausgeführt wird.

## Revendications

1. Appareil de commande de suppression du bruit de combustion d'un moteur à combustion interne (10) qui corrige une quantité d'injection pilote en fonction d'une valeur de détection d'un capteur de pression cylindre (44) qui détecte une pression cylindre du moteur à combustion interne (10), comprenant :
une unité de processus de calcul de niveau de pression sonore qui est configurée pour calculer une distribution de fréquence d'un niveau de pression sonore résultant d'une combustion de carburant d'une injection pilote, dans lequel une pression cylindre résultant de la combustion de carburant d'injection pilote est extraite d'une relation entre un angle de vilebrequin et la pression cylindre et la distribution de fréquence du niveau de pression sonore est générée en soumettant la pression cylindre résultant de la combustion de carburant de l'injection pilote à une transformée de Fourier ;
une unité de mémorisation (50a) qui est configurée pour mémoriser un seuil prédéterminé du niveau de pression sonore réglé indépendamment pour chacune d'une pluralité de fréquences ; et
une unité de processus de correction pilote qui est configurée pour corriger la quantité d'injection pilote quand le niveau de pression sonore calculé par l'unité de processus de calcul de niveau de pression sonore dépasse le seuil prédéterminé à une fréquence à laquelle le seuil prédéterminé est réglé, dans lequel une unité de processus de calcul de quantité d'excédent qui est configurée pour calculer une quantité d'excédent en tant que quantité d'excédent dépassant le seuil quand le niveau de pression sonore calculé par l'unité de processus de calcul de niveau de pression sonore dépasse le seuil à une fréquence à laquelle le seuil est réglé, dans lequel l'unité de processus de correction pilote est configurée pour corriger la quantité d'injection pilote de telle sorte que la quantité d'injection pilote diminue lorsque la quantité d'excédent augmente.

2. Appareil de commande de suppression du bruit de combustion du moteur à combustion interne (10) selon la revendication 1, **caractérisé en ce que** l'unité de processus de correction pilote est configurée pour régler une valeur qui est obtenue en multipliant un rapport par la quantité d'injection pilote, en tant que quantité de correction décroissante de la quantité d'injection pilote, le rapport étant obtenu en divisant la quantité d'excédent par un niveau de pression sonore à une fréquence à laquelle le seuil est dépassé.

3. Appareil de commande de suppression du bruit de combustion du moteur à combustion interne (10) selon l'une quelconque des revendications 1 à 2, **caractérisé en ce que**
le seuil réglé indépendamment pour chacune de la pluralité des fréquences est réglé de telle sorte que le seuil pour une haute fréquence soit supérieur à celui pour une basse fréquence.

4. Appareil de commande de suppression du bruit de combustion du moteur à combustion interne (10) selon l'une quelconque des revendications quelconque des revendications 1 à 3, **caractérisé en ce que**
chacune de la pluralité des fréquences comporte une fréquence égale ou supérieure à 5 kHz.

5. Appareil de commande de suppression du bruit de combustion du moteur à combustion interne (10) selon l'une quelconque des revendications 1 à 4, dans lequel
le moteur à combustion interne (10) est équipé d'une pluralité de cylindres, et
la pression dans un capteur de cylindre (44) est fournie dans l'un de la pluralité des cylindres, l'appareil de commande de suppression du bruit de combustion est **caractérisé en ce qu'**il comprend en outre :
une unité de processus d'apprentissage de micro-injection qui est configurée pour apprendre une quantité de correction entre cylindres afin de réduire une dispersion d'une quantité d'injection de soupapes d'injection de carburant (18) entre les cylindres quand la quantité d'injection est égale ou inférieure à une quantité prédéterminée ; et
une unité de processus de correction d'un autre cylindre qui est configurée pour corriger la quantité d'injection pilote avec une somme d'une quantité de correction servant à corriger la quantité d'injection pilote du cylindre spécifique des cylindres par l'unité de processus de correction pilote et la quantité de correction entre cylindres apprise par l'unité de processus d'apprentissage de micro-injection, quand l'injection pilote est exécutée par les soupapes d'injection de carburant (18) qui injectent le carburant dans les cylindres autres que le cylindre spécifique.

6. Appareil de commande de suppression du bruit de combustion du moteur à combustion interne (10) selon l'une quelconque des revendications 1 à 5, **caractérisé en ce qu'**il comprend en outre :
une unité de processus de rapport air-carburant qui est configurée pour commander un rapport air-carburant dans une chambre de combustion du moteur à combustion interne (10) à une valeur cible réglée de manière variable, en utilisant un degré d'ouverture d'un papillon des gaz comme quantité opérationnelle ; et
une unité de processus de correction de rapport air-carburant qui est configurée pour régler de manière variable la quantité d'injection pilote en corrigeant la quantité d'injection pilote conformément au rapport air-carburant qui est commandé à la valeur cible par l'unité de processus de rapport air-carburant,
dans lequel l'unité de processus de correction pilote est configurée pour exécuter une correction de la quantité d'injection pilote en fonction d'un excédent dépassant le seuil, quand une correction est exécutée par l'unité de processus de correction de rapport air-carburant.
